(19) **Europäisches Patentamt**

**European Patent Office**

**Office européen des brevets**

(11) Veröffentlichungsnummer: **0 377 766 B1**

(12) # EUROPÄISCHE PATENTSCHRIFT

(45) Veröffentlichungstag der Patentschrift: **25.11.92**

(21) Anmeldenummer: **89100518.3**

(22) Anmeldetag: **13.01.89**

(51) Int. Cl.5: **C02F 11/00**, B09B 5/00, C02F 1/62

(54) **Verfahren zur Vermeidung von Schwermetallsondermüll bei der Dekontaminierung natürlicher und technischer Schlämme, thermischer Rückstände und Böden.**

(43) Veröffentlichungstag der Anmeldung:
**18.07.90 Patentblatt 90/29**

(45) Bekanntmachung des Hinweises auf die Patenterteilung:
**25.11.92 Patentblatt 92/48**

(84) Benannte Vertragsstaaten:
**AT BE CH DE ES FR GB GR IT LI LU NL SE**

(56) Entgegenhaltungen:
**EP-A- 0 005 011**
**EP-A- 0 072 885**
**US-A- 4 006 215**
**US-A- 4 652 381**

(73) Patentinhaber: **industrie automation Sondertechnik GmbH & Co**
**Schlosswolfsbrunnenweg 35**
**W-6900 Heidelberg(DE)**

(72) Erfinder: **Müller, German, Prof. Dr.**
**Silcherweg 4**
**W-6919 Bammental(DE)**

(74) Vertreter: **Abitz, Walter, Dr.-Ing. et al**
**Abitz, Morf, Gritschneder, Freiherr von Wittgenstein Postfach 86 01 09**
**W-8000 München 86(DE)**

EP 0 377 766 B1

**Beschreibung**

Aus der Europäischen Patentschrift 0 072 885 ist ein Verfahren zur Schwermetalldekontaminierung bekannt, wonach die Schwermetalle durch Mineralsäuren aus Fluß- und Hafenschlämmen, Klärschlämmen, Verbrennungs- und Pyrolyserückständen und anderen relevanten Problemstoffen herausgelöst und anschließend mit Kalkmilch bei einem pH um 10 wieder als Hydroxide ausgefällt werden; durch Kohlendioxid werden die Hydroxide karbonatisiert und restliche, noch in Lösung befindliche Metalle bis auf analytisch kaum erfaßbare Spuren herausgeholt.

Die dekontaminierten Ausgangsstoffe können nun einer wirtschaftlich sinnvollen Nutzung zugeführt werden. So zum Beispiel Fluß- und Hafenschlämme bei der Herstellung von Ziegeln, Leichtbaustoffen oder Zementbaustoffen; ähnlich können dekontaminierte Verbrennungs- und Pyrolyserückstände genutzt werden. Dekontaminierte Klärschlamme können wertvolle Düngemittel sein. In allen Fällen ist eine problemlose Deponierung möglich.

Die bei der Dekontaminierung gewonnenen Schwermetallhydroxide und -karbonate sind an und für sich wertvolle recyclierbare Rohstoffe. Problematisch ist aber der hohe Eisengehalt, der meist um 90 % des Gesamtmetallgehaltes liegt. Die Recyclierung der wertvollen Nichteisen-Schwermetalle wird dadurch weitgehend uninteressant, insbesondere zu Zeiten, wo auf dem Weltmarkt ein preisgünstiges Überangebot an Metallerzen und Altmetall vorliegt.

Das Verfahren der Europäischen Patentschrift 0 072 885 beschreibt zwar eine Vorabfällung eines Teiles der Schwermetalle durch Neutralisation mittels basischer Calciumverbindungen, zeigt jedoch keinen Weg auf, wie die Metalle quantitativ und selektiv voneinander getrennt werden können. Die nach diesem Verfahren gewonnene Eisenfraktion ebenso wie die bei größerem pH-Wert ausgefällte Schwermetallfraktion bestehen jedoch überwiegend aus Eisen und sind daher in der Hüttenindustrie nicht als Rohstoffe einsetzbar.

Die bei den bekannten Dekontaminierungsverfahren anfallenden Schwermetallhydroxid/Karbonatgemische müssen daher großenteils als teurer und unbeliebter Sondermüll deponiert werden.

Es sind zwar verschiedene Verfahren zur Auftrennung von Schwermetallen bekannt, keines der bekannten Trennverfahren für Schwermetalle, wie

sulfidische Trennvorgänge
Trennung durch Komplexierung oder
Trennung durch Ionenaustausch

befriedigen jedoch. Entweder sind die Kosten für Chemikalien oder Anlageteile zu hoch, oder die Trennvorgänge als solche sind nicht spezifisch genug. Die sulfidische Trennung würde zwar eine gute Separierung ermöglichen, ist aber heute umweltpolitisch kaum mehr durchsetzbar und bedingt hohe Investitionskosten wegen notwendiger Sicherheitsmaßnahmen.

US-A-4 006 215 beschreibt ein Aufbereitungsverfahren für Ni-haltige Erze, die neben Ni noch Fe und Co enthalten. Es wird gelehrt, die Metalle mit Schwefelsäure bei erhöhter Temperatur herauszulösen und mit Magnesiumhydroxid wieder auszufällen. Gearbeitet wird mit pH-Werten von 4 an aufwärts. Zunächst fällt Fe, bei pH 8 dann Co und Ni.

In US-A-4 652 381 wird ein Verfahren beschrieben, wie Metallabfälle aus der Akkumulatorenfertigung als Karbonate eliminiert werden können. Mittels Calciumcarbonat werden bei pH 5 Blei- und Zinkkarbonat ausgefällt. Es wird gelehrt, daß Bleikarbonat bei pH 5 weniger löslich ist, als Bleihydroxid bei pH 7. Auch für Zink und Kupfer wird dies postuliert. Eisen wird ebenfalls bei pH 5 durch Calciumcarbonat mit ausgefällt, wobei durch Luftoxidation Fe in Form von $Fe^{III}$ vorliegt. Alle Metalle fallen gemeinsam aus.
Dieses Verfahren bietet keine Lösung zur quantitativen Trennung einzelner Metalle oder Metallgruppen und gibt eine solche auch nicht vor.

Für die Praxis stellt sich daher die Aufgabe, einfache, preisgünstige und technologisch gangbare Wege zu finden, das Eisen möglichst quantitativ von den übrigen Schwermetallen abzutrennen und auch diese unter sich einzeln oder wenigstens gruppenmäßig so voneinander zu separieren, daß sie zu wirtschaftlich interessanten Rohstoffen für die Hüttenindustrie werden.

Bei verschiedenen Versuchen zur Lösung dieser Aufgabe wurde nun gefunden, daß sich die Auftrennung der Metallrückstände durch fraktionierte Fällung der Metallsalze bei verschiedenen pH-Werten als Metallhydroxide trennscharf erreichen läßt. Überraschenderweise gelingt diese Trennung bei sauren pH-Werten. Ebenfalls überraschend und bisher unbekannt war, daß die verschiedenen Metallsalze bei unterschiedlichen pH-Werten ein stark voneinander abweichendes Fällungsverhalten zeigen, das zu ihrer trennscharfen Auftrennung genutzt werden kann.

Es wurde nun gefunden, daß die Trennung der Metallrückstände möglich ist durch Behandlung der Ausgangsstoffe mit Mineralsäuren zur Auflösung der Schwermetalle als wasserlösliche Salze, Abtrennung der Feststoffanteile und Wiederausfällung der Metalle als Hydroxide mittels genauer pH-Steuerung, dadurch gekennzeichnet, daß bei pH 3,5 zunächst eine Eisen/Mangan-Fraktion abgetrennt wird, danach die anderen Schwermetalle im pH-Bereich von 4 - 11 selektiv nach ihrem pH-abhängigen Fällverhalten entweder einzeln oder in Gruppen spezifisch ausgefällt werden und die, die Metallsalze enthaltende Lösung spätestens bei der Abtrennung der Eisen/Mangan-Fraktion bei pH 3,5 mit einem Oxidationsmittel behandelt wird.

Die Oxidation kann durch jedes beliebige Oxidationsmittel erfolgen. Bevorzugte Oxidationsmittel sind Luft und Wasserstoffperoxid. Besonders bevorzugt erfolgt die Oxidation durch 5 bis 20 Minuten langes Einleiten von Luft oder durch Zugabe von 0,01 % Wasserstoffperoxid.

Um eine quantitative Ausfällung der einzelnen Metallfraktionen zu erzielen, kann die Fällung bei einem bestimmten pH, vorzugsweise zwischen 3 und 4,5, durch Wiederansäuerung und Neualkalisierung einmal oder mehrmals wiederholt werden.

Nach der Abtrennung der Eisen/Mangan-Fraktion bei pH 3,5 kann bei pH 5 eine Bleifraktion und anschließend bei pH 7 eine Nickel/Chrom/Cobalt/Kupfer-Fraktion abgetrennt werden.

Schließlich können noch vorhandene Restmengen an Cadmium und Zink bei pH 9-11, vorzugsweise pH 10-11, abgetrennt werden.

Mit dem erfindungsgemäßen Verfahren wird die Lagerung der bei der Dekontaminierung gewonnenen Schwermetallrückstände auf Deponien vermieden. Die Deponiekosten entfallen. Andererseits sind die verschiedenen Metallfraktionen wertvolle Rohstoffe, deren Verkauf die Verfahrenskosten zusätzlich senkt. Von Vorteil gegenüber natürlichen Erzen ist dabei auch die leicht aufschließbare Form der mit dem erfindungsgemäßen Verfahren gewonnenen Hydroxide und Karbonate.

Durch gezielte Fällungen in bestimmten pH-Bereichen ist es nunmehr möglich, einzelne Metalle und Metallgruppen quantitativ voneinander zu separieren. So gelingt es zum Beispiel, durch wiederholtes Fällen, Wiederansäuern und Wiederausfällen bei pH 3,5 Eisen und Mangan als Fraktion nahezu quantitativ von den übrigen Schwermetallen abzutrennen. Dies ist der wohl wichtigste Schritt des erfindungsgemäßen Verfahrens für die Praxis. Das nutzlose und für die Recyclierung der Schwermetalle problematische Eisen ist eliminiert und steht nun in Form eines wertvollen, leicht aufschließbaren quasi Mangan-Erzes mit 3 bis 6 % Mangan und darüber (je nach Provenienz) für die Hüttenindustrie zur Verfügung.

Nachfolgend sind 9 Kurven für jedes einzelne relevante Schwermetall aufgezeichnet. Sie zeigen, welcher Anteil des gelösten Metalls in Abhängigkeit vom pH-Wert als Hydroxid ausfällt, so zum Beispiel Blei praktisch quantitativ bei pH 5, Eisen und Mangan zu je 2/3 bei pH 4 und zu je ca. 55 % bei pH 3,5, Nickel, Chrom und Cobalt bei pH 7 zu 90 % und Cadmium und Zink praktisch quantitativ bei pH 10,5.

Auffallend ist, daß sich chemisch verwandte und geologisch zusammengehörige Metalle in ihren Niederschlagseigenschaften gleich verhalten, wie z.B. Eisen und Mangan oder Zink und Cadmium.

Anhand der Kurven und der folgenden Patentbeispiele ist es dem Fachmann möglich, durch fraktionierte Fällung bei anderen bestimmten pH-Werten einzelne Metalle oder Metallgruppen anzureichern. Es gelingt so, Schwermetallfraktionen zu erhalten, die den Abnehmerwünschen im Hüttenwesen entgegenkommen.

Gegenstand des erfindungsgemäßen Verfahrens ist es, durch selektive Fällung in definierten pH-Bereichen einzelne Metalle oder Metallgruppen zu gewinnen, die in ihrer Zusammensetzung an bestimmten Metallen so angereichert sind, wie es für spezifische Recyclierungsschritte optimal ist.

Die nachfolgenden Beispiele sind nicht erschöpfend und geben nur einige spezifische Möglichkeiten des erfindungsgemäßen Verfahrens wieder. Durch andere als in den Beispielen gewählte Fraktionierungen bei anderen pH-Werten können die Schwermetallzusammensetzungen der Fraktionen variiert und den Bedürfnissen der Abnehmer weitgehend angepaßt werden. Für viele Fälle wird es auch ausreichen, die Schwermetalle nach der praktisch quantitativen Abrennung der Eisen/Mangan-Fraktion in ihrer Gesamtheit bei pH 10-11 zu fällen und weiterzugeben.

Patentbeispiel 1

Als Ausgangsstoff diente ein Baggerschlamm mit 33,3% Trockensubstanz aus dem Neckar mit folgenden Schwermetallgehalten, bezogen auf Trockensubstanz:

| Eisen | 1,87% |
|---|---|
| Zink | 650 ppm |
| Mangan | 625 ppm |
| Chrom | 375 ppm |
| Kupfer | 329 ppm |
| Blei | 193 ppm |
| Nickel | 83 ppm |
| Cadmium | 43 ppm |
| Cobalt | 13 ppm |

3 kg dieses Schlammes wurden mit Wasser auf 25% Trockensubstanz verdünnt und mit 30%iger Salzsäure behandelt, bis ein konstanter pH-Wert von 0,5 erreicht war. Der Feststoff wurde von der Lösung abgetrennt und mit der ca.15-fachen Menge Wasser gewaschen.

Die Absorptions-Spektralanalyse ergab in der sauren Lösung Schwermetallgehalte von:

| 16 700 mg | Eisen |
|---|---|
| 620 mg | Mangan |
| 190 mg | Blei |
| 356 mg | Chrom |
| 306 mg | Kupfer |
| 80 mg | Nickel |
| 13 mg | Cobalt |
| 630 mg | Zink |
| 42 mg | Cadmium |

Zur quantitativen Eisen/Mangan-Abtrennung wurde unter kräftigem Rühren der pH mit einer 15%igen Kalkmilchaufschlämmung auf 3,5 eingestellt und zur Oxidation des Eisens 10 Minuten lang Luft eingeleitet. Es fiel ein brauner Niederschlag aus, der abgenutscht, mit destilliertem Wasser gewaschen und getrocknet wurde. Er enthielt 8407 mg Eisen und 301 mg Mangan. Nach Wiederansäuerung und insgesamt achtmaliger Wiederholung waren noch 3,1 mg Mangan und 73 mg Eisen in Lösung. Die übrigen Metalle waren nur in Mengen unter 3 mg mit ausgefallen.

Patentbeispiel 2

Zur praktisch quantitativen Separierung des Bleis wurde die im Patentbeispiel 1 gewonnene Lösung nunmehr mit weiterer 15%iger Kalkmilch unter kräftigem Rühren auf pH 5 eingestellt. Die ausgefallenen Metallhydroxide wurden abfiltriert, mit destilliertem Wasser gewaschen und getrocknet.

Sie enthielten

| 186 mg | Blei |
|---|---|
| 285 mg | Chrom |
| 110 mg | Kupfer |
| 31 mg | Nickel |
| 5 mg | Kobalt |
| 378 mg | Zink |
| 2,9 mg | Cadmium |

Ferner enthielt der Niederschlag noch 61 mg Eisen und 2,6 mg Mangan.

Patentbeispiel 3

Die aus Patentbeispiel 2 gewonnene Lösung wurde mit weiterer 15%iger Kalkmilch unter kräftigem Rühren auf pH 7 eingestellt und wie im Patentbeispiel 2 beschrieben weiterbehandelt.

Im Niederschlag wurde an Metallen analysiert:

| 69 mg | Chrom |
|---|---|
| 135 mg | Kupfer |
| 48 mg | Nickel |
| 7,1mg | Cobalt |
| 239 mg | Zink |
| 22,7mg | Cadmium |

Daneben enthielt der Niederschlag noch 10 mg Eisen.

Diese Fällung ist als Cr/Co/Ni/Cu-Fraktion (mit hohem Zinkanteil) ein wertvoller Rohstoff zur Schwermetallrecyclierung.

Patentbeispiel 4

Die aus Patentbeispiel 3 übrig gebliebene Lösung wurde auf pH 11 eingestellt und nach 20 Minuten langer Behandlung mit Kohlendioxid wie in den Patentbeispielen 2 und 3 beschrieben, weiter bearbeitet.

Der Niederschlag enthielt

| 59 mg | Kupfer |
|---|---|
| 12 mg | Zink |
| 15,6mg | Cadmium. |

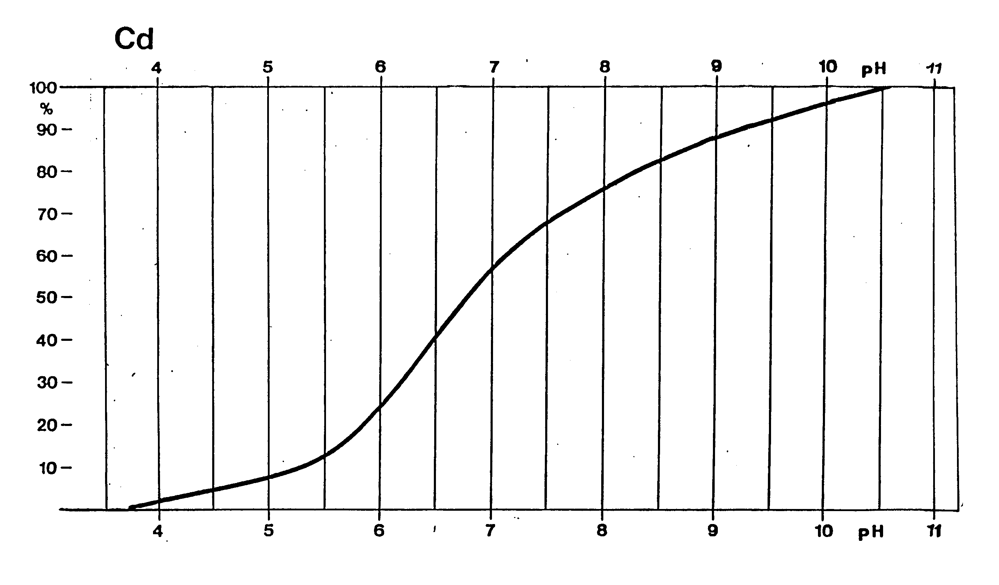

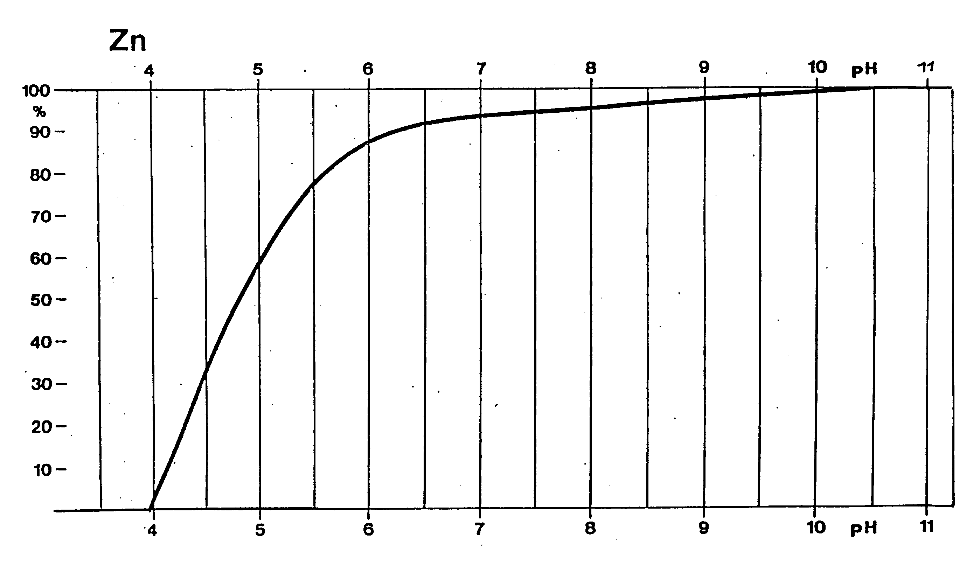

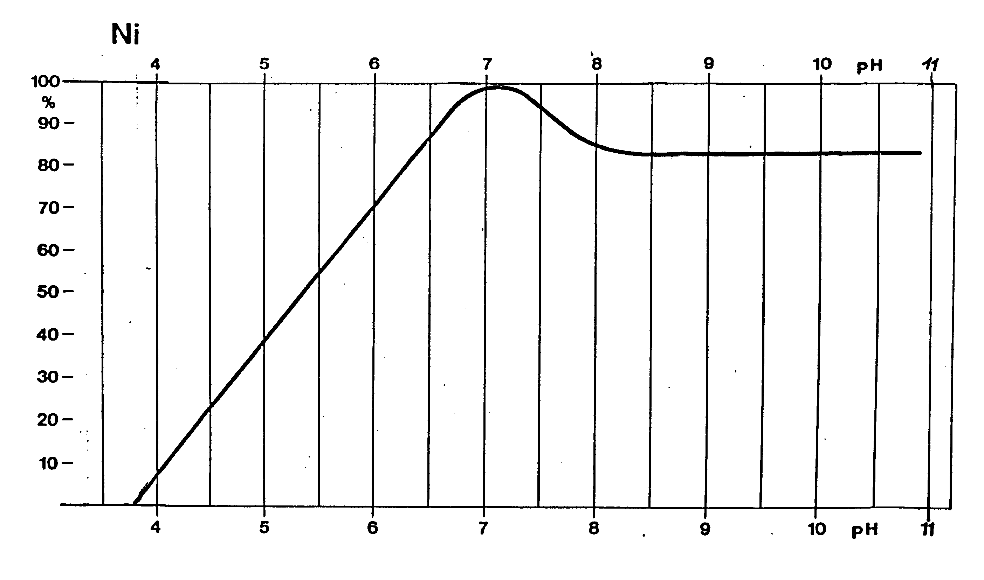

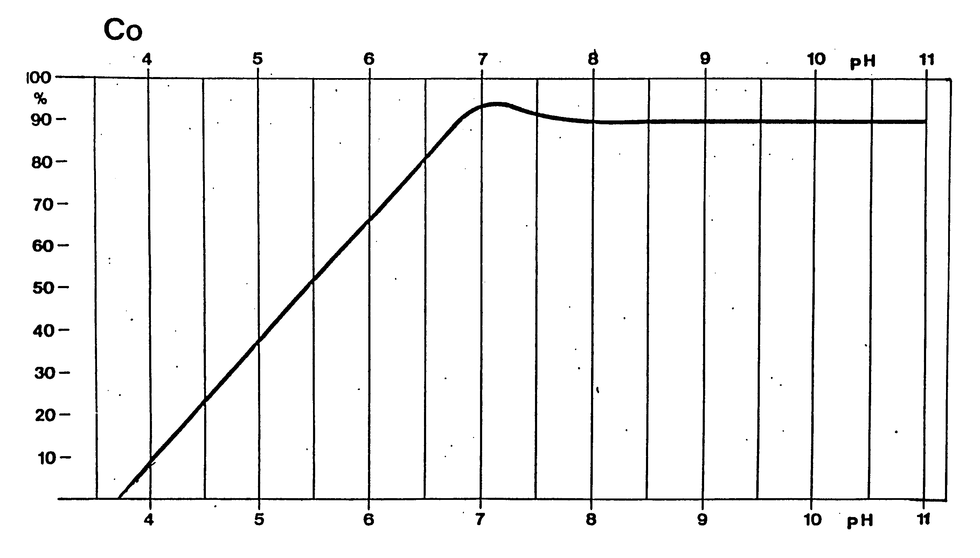

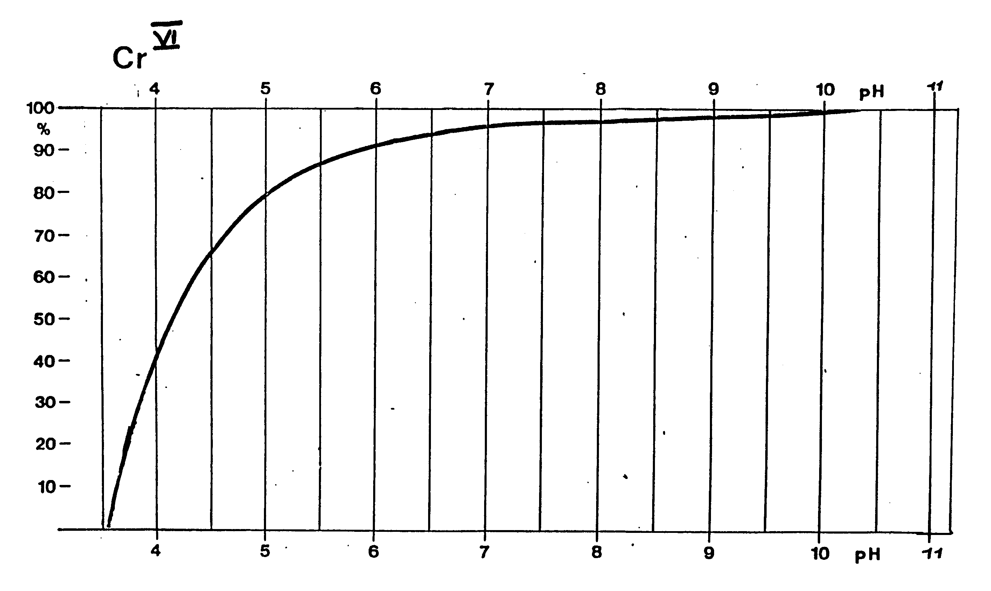

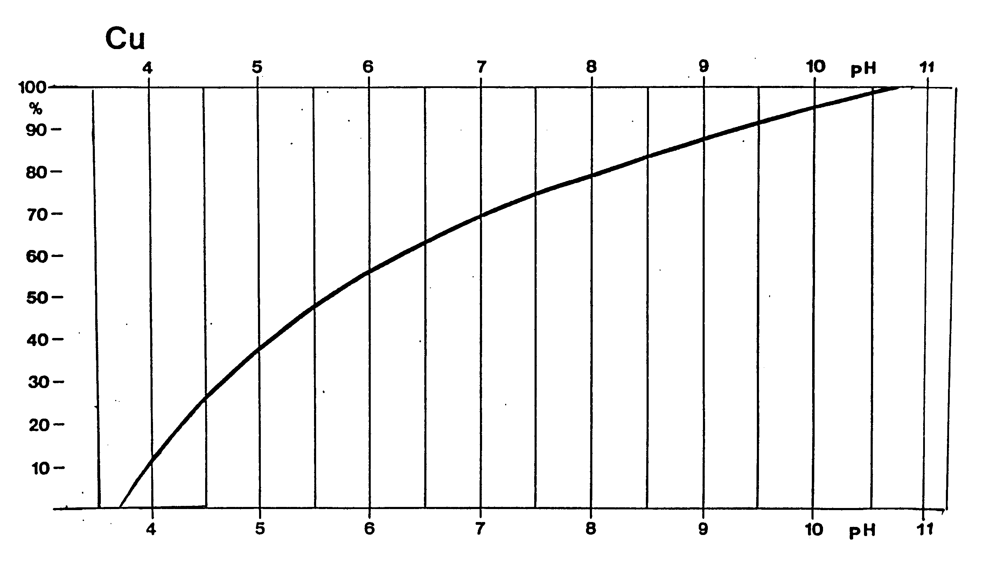

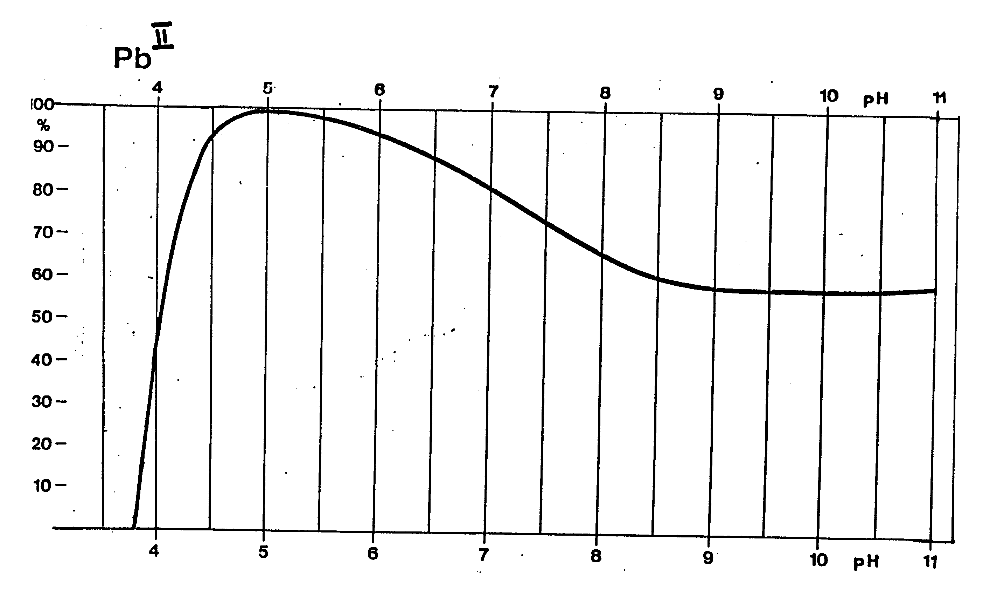

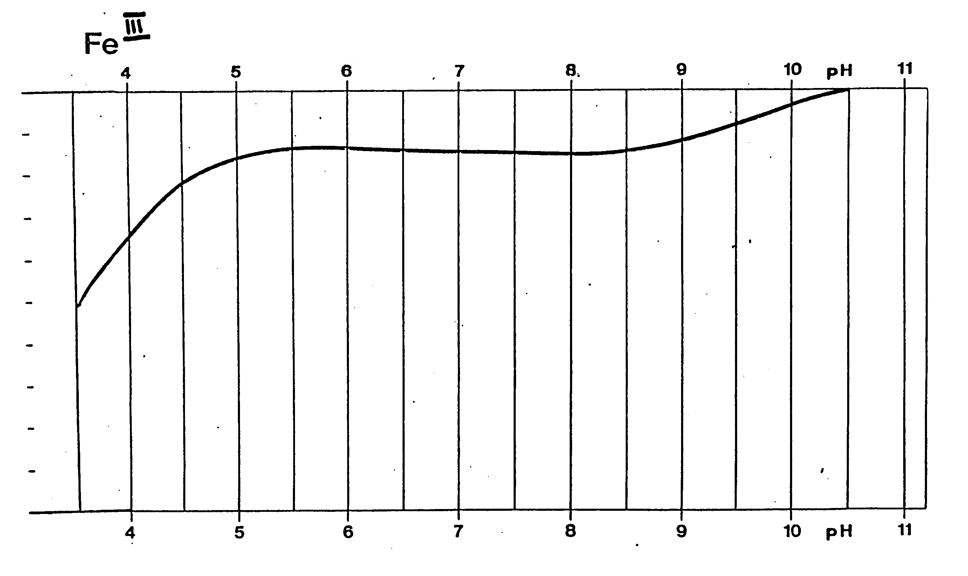

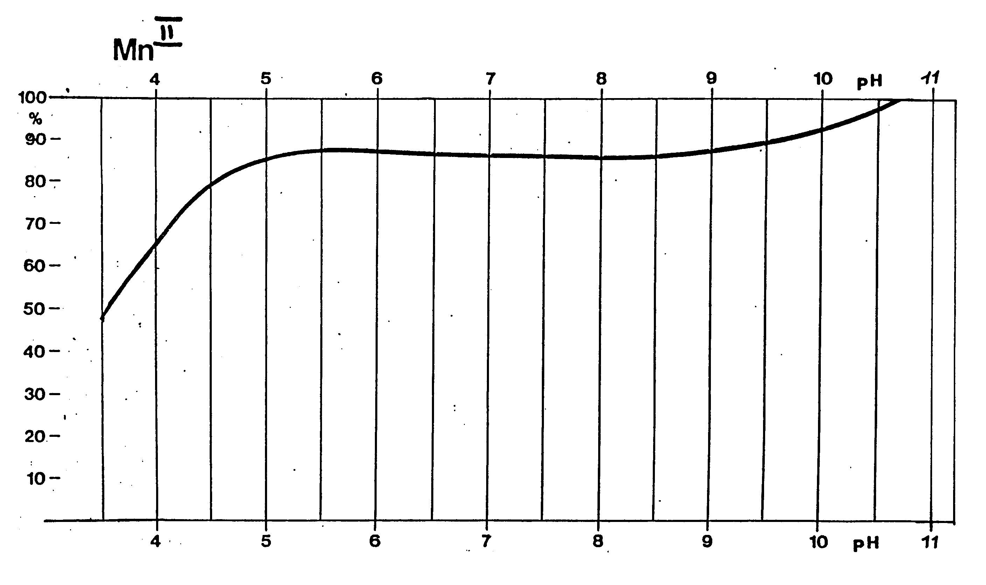

**Patentansprüche**

1. Verfahren zur Vermeidung von Schwermetallsondermüll aus der Dekontaminierung natürlicher und technischer Schlämme, thermischer Rückstände und Böden durch Behandlung der Ausgangsstoffe mit Mineralsäuren zur Auflösung der Schwermetalle als wasserlösliche Salze, Abtrennung der Feststoffanteile und Wiederausfällung der Metalle als Hydroxide mittels genauer pH-Steuerung, dadurch gekennzeichnet, daß bei pH 3,5 zunächst eine Eisen/Mangan-Fraktion abgetrennt wird, danach die anderen Schwermetalle im pH-Bereich von 4 - 11 selektiv nach ihrem pH-abhängigen Fällverhalten entweder einzeln oder in Gruppen spezifisch ausgefällt werden und die, die Metallsalze enthaltende Lösung spätestens bei Abtrennung der Eisen/Mangan-Fraktion bei pH 3,5 mit einem Oxidationsmittel behandelt wird, wobei die Fällungen, vorzugsweise die Eisen/Mangan-Fällung im pH-Bereich 3,5 - 4,0 bedarfsweise durch Wiederansäuern und Neualkalisierung ein- oder mehrmals wiederholt werden.

2. Verfahren nach Patentanspruch 1, dadurch gekennzeichnet, daß, nach Fällung der Eisen/Mangan-Fraktion, bei pH 5 eine Bleifraktion abgetrennt wird.

3. Verfahren nach Patentanspruch 2, dadurch gekennzeichnet, daß, nach der Fällung der Eisen/Mangan- und der Bleifraktion, bei pH 7 eine Nickel/Chrom/Cobalt/Kupfer-Fraktion abgetrennt wird.

4. Verfahren nach Patentanspruch 3, dadurch gekennzeichnet, daß nach der Fällung der Eisen/Mangan-, der Blei- und der Nickel/Chrom/Cobalt/Kupfer-Fraktion die noch vorhandenen Restmengen an Cadmium und Zink bei pH 9-11, vorzugsweise pH 10-11, abgetrennt werden.

**Claims**

1. Process for preventing heavy metal special waste arising from the decontamination of natural and industrial slurries, thermal residues and soils by treating the starting products with mineral acids in order to dissolve the heavy metals as water-soluble salts, separating the solids proportions and reprecipitating the metals as hydroxides by means of accurate pH control, characterised in that an iron/manganese fraction is separated initially at pH 3.5, thereafter the other heavy metals are precipitated specifically in the pH range of 4 - 11, selectively according to their pH-dependent precipitation behaviour, either individually or in groups, and the solution containing the metal salts is treated with an oxidising agent at the latest when the iron/manganese fraction is separated at pH 3.5, the precipitation operations, preferably the iron/manganese precipitation, being repeated once or several times in the pH range 3.5 - 4.0, if necessary by re-acidification and re-alkalinization.

2. Process according to patent claim 1, characterised in that, after precipitation of the iron/manganese fraction, a lead fraction is separated at pH 5.

3. Process according to patent claim 2, characterised in that, after precipitation of the iron/manganese and the lead fraction, a nickel/chromium/cobalt/copper fraction is separated at pH 7.

4. Process according to patent claim 3, characterised in that, after precipitation of the iron/manganese, the lead and the nickel/chromium/cobalt/copper fraction, the residual quantities of cadmium and zinc still present are separated at pH 9-11, preferably pH 10-11.

## Revendications

1. Procédé pour éviter les déchets particuliers de métaux lourds pendant la décontamination des boues naturelles ou techniques, des résidus thermiques et des terres, par le traitement du matériau de départ avec des acides minéraux en vue de dissoudre les métaux lourds sous forme de sels hydrosolubles, la séparation des matières solides et la reprécipitation des métaux sous forme d'hydroxydes au moyen d'un ajustement précis du pH, caractérisé en ce qu'on sépare d'abord à un pH de 3,5 une fraction fer/manganèse, ensuite on précipite spécifiquement, à un pH compris dans une plage de 4 à 11, les autres métaux lourds, sélectivement selon leur aptitude à précipiter, liée au pH, soit isolément, soit un groupe, et on traite la solution contenant les sels métalliques au plus tard lors de la séparation de la fraction fer/manganèse à un pH de 3,5 avec un moyen d'oxydation, les précipitations, avantageusement la précipitation fer/manganèse, étant recommencées une ou plusieurs fois en tant que de besoin dans un domaine de pH de 3,5 à 4 par acidification et neutralisation.

2. Procédé selon la revendication 1 caractérisé en ce qu'après la précipitation de la fraction fer/manganèse, on sépare une fraction du plomb à un pH de 5.

3. Procédé selon la revendication 2 caractérisé en ce qu'après la précipitation des fractions fer/manganèse et plomb, on sépare une fraction nickel/chrome/cobalt/cuivre à un pH de 7.

4. Procédé selon la revendication 3 caractérisé en ce qu'après la précipitation des fractions fer/manganèse, plomb et nickel/chrome/cobalt/cuivre, les reliquats encore présents de cadmium et zinc sont séparés à un pH compris entre 9 et 11, de préférence entre 10 et 11.

Cd

EP 0 377 766 B1

EP 0 377 766 B1

EP 0 377 766 B1

Pb $\frac{II}{}$

EP 0 377 766 B1

14

EP 0 377 766 B1